# EUROPÄISCHE PATENTANMELDUNG

(11) **EP 1 262 483 A1**
(43) Veröffentlichungstag der Anmeldung: **04.12.2002**
(21) Anmeldenummer: 02008244.2
(22) Anmeldetag: 18.04.2002
(51) Int. Cl.: C07F 7/12

(54) **Verfahren zur Herstellung von Silanen**

(30) Priorität: 31.05.2001 DE 10126558
(71) Anmelder: Wacker-Chemie GmbH, 81737 München (DE)
(72) Erfinder: Streckel, Willi, 84561 Mehring-Öd (DE); Kalchauer, Wilfried, Dr., 84489 Burghausen (DE); Straussberger, Herbert, 84561 Mehring-Öd (DE)
(74) Vertreter: Fritz, Helmut, Dr.

(57) **Zusammenfassung**

Gegenstand der Erfindung ist ein Verfahren zur Herstellung von Silanen der allgemeinen Formel 1

RₐSiH_{b}Cl_{4-a-b} (1),

wobei
- **R**: Methyl oder Ethyl,
- **a**: die Werte 0, 1, 2 oder 3 und
- **b**: die Werte 0 oder 1 bedeuten,
aus Chlorwasserstoffgas und Reaktionspartnern, die ausgewählt werden aus
a) Siliciummetall und
b) Di- und Oligosilanen, deren Reste ausgewählt werden aus H, **R** und Cl,
bei dem die Herstellung des Chlorwasserstoffgases aus H₂ und Cl₂ im gleichen Verfahrensschritt erfolgt.

## Beschreibung

Die Erfindung betrifft ein Verfahren zur Herstellung von Silanen aus Chlorwasserstoffgas und Reaktionspartnern, die ausgewählt werden aus Siliciummetall und Di- und Oligosilanen.

Bei der Herstellung von Chlorsilanen wird Silicium, gegebenenfalls in Gegenwart von Katalysatoren, mit Chlorwasserstoffgas umgesetzt, wobei sich in Abhängigkeit von den Reaktionsbedingungen Trichlorsilan oder Tetrachlorsilan als Hauptprodukte bilden. Die gewählte Reaktionstemperatur hängt massiv vom gewünschten Zielprodukt (HSiCl₃ oder SiCl₄) ab beträgt normalerweise 230 bis mehrere hundert °C. Trichlorsilan wird beispielsweise für die Herstellung von hochreinem Silicium oder die Herstellung von (organo)funktionellen Silanen verwendet, Tetrachlorsilan wird beispielsweise bei der Herstellung von pyrogener Kieselsäure eingesetzt. Dies ist in "Catalyzed Direct Reactions of Silicon, Edited by K.L. Lewis; D.G. Rethwisch, Elsevier 1993 [1]; Commercial Production of Silanes by Direct Synthesis, Seiten 1 - 66" und "Direct Synthesis of Chlorosilanes and Silane; Seiten 441 - 457" beschrieben.

Bei der Direktsynthese von Methylchlorsilanen nach Müller-Rochow (Direktsynthese) wird Silicium mit Methylchlorid, in Gegenwart von Katalysatoren und Promotoren zu Dimethyldichlorsilan umgesetzt, wobei als Nebenprodukte auch höhersiedende Methylchlordi- und Oligosilane/siloxane und Carbosilane gebildet werden [1]. In US-A-5,877,337 wird ein Verfahren beschrieben, bei dem feststoffhaltige Rückstände der Direktsynthese von Organochlorsilanen bei geringen Drücken aufgearbeitet und die siliciumorganischen Anteile in verwertbare Silane umgewandelt werden. Das Ziel wird erreicht, durch die thermische Spaltung der Rückstände der Direktsynthese mit Chlorwasserstoff in einem Rohrreaktor mit drehenden Einbauten bei Temperaturen von 300 - 800 °C. Durch die Drehbewegungen der Einbauten werden Anbackungen durch Verkokung oder aus den Feststoffanteilen an den Reaktorwänden abgeschert. Ein Zuwachsen des Reaktors soll dadurch verhindert werden.

Diese Verfahren zeichnen sich dadurch aus, dass Chlorwasserstoffgas benötigt wird, und dass die Reaktionen bei höheren Temperaturen durchgeführt werden. Das Chlorwasserstoffgas wird aus entsprechenden Lagertanks entnommen und muss gegebenenfalls vorgewärmt werden. In [1] wird beispielsweise auf Seite 6 beschrieben, dass flüssiger wasserfreier Chlorwasserstoff, der bei der Direktsynthese von Chlorsilanen eingesetzt wird, typischerweise zur Produktionsstätte in gekühlten Kesselwagen transportiert wird. HCl wird verdampft, auf etwa 200°C erhitzt und anschliessend in den Reaktor überführt.

Die Herstellung von HCl aus den Elementen ist bekannt. H₂ und Cl₂ werden von einander getrennt einer Brennkammer zugeführt, vermischt und in einer Brennerflamme zur Reaktion gebracht. Die Reaktion ist stark exotherm, sodass Flammentemperaturen von über 2000°C möglich sind. Über entsprechende Kühlaggregate wird das Chlorwasserstoffgas anschließend abgekühlt.

Gegenstand der Erfindung ist ein Verfahren zur Herstellung von Silanen der allgemeinen Formel 1

RₐSiH_{b}Cl_{4-a-b} (1),

wobei
- **R**: Methyl oder Ethyl,
- **a**: die Werte 0, 1, 2 oder 3 und
- **b**: die Werte 0 oder 1 bedeuten,
aus Chlorwasserstoffgas und Reaktionspartnern, die ausgewählt werden aus
a) Siliciummetall und
b) Di- und Oligosilanen, deren Reste ausgewählt werden aus H, **R** und Cl,
bei dem die Herstellung des Chlorwasserstoffgases aus H₂ und Cl₂ im gleichen Verfahrensschritt erfolgt.

Das Verfahren hat den Vorteil, dass Chlorwasserstoff nicht transportiert und/oder zwischengelagert und vorgewärmt werden muss, dass auf Grund der höheren Temperaturen eine höhere Umsatzrate und/oder geringere Reaktionszeiten erzielbar sind, dass relativ hohe Reaktionstemperaturen sehr einfach erreichbar sind, dass nicht zwei getrennte Anlagen gebaut und betrieben werden müssen, dass es einfach durchführbar ist, da keine bewegten Teile benötigt werden, dass beim Einsatz der Methylsilane die unerwünschten Zersetzungsreaktionen geringer sind, dass die für die Reaktion benötigte Energie nicht über heiße Wände eingebracht werden muss, und dass die Reaktormaterialien thermisch weniger stark belastet werden. Es kann auf preiswertere Reaktormaterialien zurückgegriffen werden, da der Energieeintrag nicht über die Reaktorwände erfolgen muss.

Die Herstellung der Silane der allgemeinen Formel 1 und die Herstellung des Chlorwasserstoffgases aus H₂ und Cl₂ erfolgen bevorzugt in einer Reaktionszone.

Beim vorliegenden Verfahren werden vorzugsweise in eine Anlage zur HCl-Erzeugung zusätzlich zu H₂ und Cl₂ die Reaktionspartner (a) und/oder (b) mit eingespeist und so zur Reaktion gebracht.

Die eingesetzten Di- und Oligosilane weisen bevorzugt nur Reste **R** und Cl auf.

Vorzugsweise erfolgt die Herstellung des Chlorwasserstoffgases aus H₂ und Cl₂ in einem Verbrennungsrohr. Vorzugsweise wird die Länge des Verbrennungsrohres so ausgelegt, dass die Verweilzeit der Reaktionsgase im heißen Reaktionsbereich 1 bis 30 Sekunden, bevorzugt 2 bis 20 Sekunden, besonders bevorzugt 3 bis 15 Sekunden beträgt.

Die Gasgeschwindigkeit im Verbrennungsrohr wird vorzugsweise so gewählt, dass keine Ablagerungen im Rohr auftreten.

Zusätzlich zu dem aus H₂ und Cl₂ im gleichen Verfahrensschritt hergestellten Chlorwasserstoffgas kann auch Chlorwasserstoffgas als Reaktionspartner (c) eingespeist werden. Die maximale Menge an zudosierter HCl wird so gewählt, dass die Temperatur im Bereich der Reaktion von Chlorwasserstoffgas mit den Reaktionspartnern bevorzugt mindestens 400°C beträgt, insbesondere beträgt die Temperatur mindestens 500°C, besonders bevorzugt mindestens 600°C. In diesem Fall dient die zugespeiste HCl gleichzeitig als Kühlmedium, d.h. die Flammentemperatur wird auf die gewünschte Reaktionstemperatur abgestimmt.
Als Kühlmedium können aber auch andere, bei diesen Bedingungen inerte Stoffe eingesetzt werden. Bevorzugt werden Chlorsilane, beispielsweise Siliciumtetrachlorid, oder überschüssiger (berechnet auf die Reaktion H₂ und Cl₂ -> 2 HCl) Wasserstoff eingesetzt, da diese ohnehin im Reaktionssystem vorhanden sind.

Das Mischungsverhältnis von H₂ zu Cl₂ wird so gewählt, dass H₂ im stöchiometrischem Überschuss eingesetzt wird. Dies hat den Vorteil, dass beispielsweise die in US-A-5,292,909 beschriebene Umwandlung von hochsiedenden Silanfraktionen in Monosilane durchgeführt werden kann, ohne dass Druck oder zusätzliche Katalysatoren zum Einsatz kommen, und dass die Führung der Flamme vereinfacht wird. Der molare Überschuss von H₂ kann in weiten Bereichen variiert werden und richtet sich nach der gewünschten Reaktion.

Das stöchiometrische Verhältnis Si:HCl beim Einsatz von Silicium (a) und Si-Si :HCl bezogen auf die Si-Si Bindungen in den Di- und Oligosilanen (b) kann frei gewählt werden. In einer besonders bevorzugten Ausführungsform wird die HCl-Menge so gewählt, dass nach der erfolgten Umsetzung der Reaktionspartner keine merklichen Mengen an HCl vorhanden sind. Dies hat den Vorteil, dass nach der Reaktion die Aufarbeitung erleichtert wird.

Nach dem Verlassen der Reaktionszone wird das Reaktionsgas, das die Silane der allgemeinen Formel 1 enthält, gekühlt. Das Kühlen kann ein oder mehrstufig erfolgen, die noch abzuführende Reaktionswärme kann, falls erwünscht (zumindest teilweise) zur Herstellung von Wasserdampf benutzt werden.
Wenn beim Verfahren Reaktionspartner (a) und (b) enthaltende Einsatzstoffe verwendet werden, die in nennenswerten Mengen Metalle oder Metallchloride enthalten, die in Chlorsilanen löslich sind, empfiehlt sich eine entsprechende Abtrennung, wie sie beispielsweise in [1] Seite 6 beschrieben ist.
Eine Feststoffabtrennung nach der Reaktion ist beim Einsatz von feststoffhaltigen Einsatzstoffen erforderlich. Diese kann als Heißgasfiltration und/oder als flüssig/fest-Filtration nach der Kondensation der Silane allgemeinen Formel 1 ausgeführt werden. Bevorzugt ist eine erste Gas/Fest-Trennung über Zyklone mit einer anschließenden flüssig/fest-Filtration nach der Kondensation, da dies einfach durchführbar und effektiver ist. Das nach der Kondensation verbleibende Gas ist in der bevorzugten Ausführungsform zum größten Teil Wasserstoff und kann wieder zur HCl-Erzeugung eingesetzt werden, gegebenenfalls gebildetes Methan muss jedoch zuvor abgetrennt werden, Reste von HCl stören nicht. Der nach der Kondensation und Filtration flüssige Produktstrom besteht hauptsächlich aus Silanen allgemeinen Formel 1 und wird einer Destillation zugeführt. Nicht umgesetzte siliciumhaltige Einsatzstoffe können, wenn gewünscht wieder teilweise oder vollständig in den Reaktor eingespeist werden.

Die Dosierung der Reaktionspartner (a) und (b) erfolgt derart, dass diese entweder direkt in die Flamme oder in den heißen HCl-Gasstrom eingebracht werden, das Einbringen kann tangential, radial oder axial zur Flammenrichtung erfolgen. Es ist auch möglich die Reaktionspartner (a) und (b) gemeinsam mit dem H₂ Strom in die Reaktionszone einzubringen.

An die Reinheit der Reaktionspartner (a) und (b) enthaltenden Einsatzstoffe werden keine besonderen Ansprüche gestellt, sie können durchaus stark verunreinigt sein. Wird Siliciummetall (a) eingesetzt, so können beispielsweise Stäube, wie sie bei der Silicium oder Ferrosilicium Zerkleinerung anfallen zum Einsatz kommen, es können siliciumhaltige Stäube, wie sie bei der Chlorsilansynthese oder bei der Methylchlorsilansynthese anfallen (und teilweise noch Katalysatorbestandteile wie beispielsweise Kupfer/-verbindungen und Zink/-verbindungen enthalten) direkt zu Einsatz kommen, es können aber auch trockene Si haltige Nebenanfälle aus dem Müller-Rochow-Prozess, wie sie nach einer Cu-Rückgewinnung anfallen, verwendet werden.

Es ist auch möglich, Silicium und/oder Ferrosilicium als Einsatzstoff für das Verfahren aufzumahlen.

Siliciummetall (a) wird vorzugsweise feinteilig eingebracht. Das eingesetzte Silicium hat eine Korngröße von vorzugsweise höchstens 100 µm, insbesondere höchstens 70 um, besonders bevorzugt höchstens 50 µm.

Das Siliciummetall (a) kann bis zu 50 Gew.-%, insbesondere bis zu 30 Gew.-% an anderen Elementen enthalten. Die Art und Konzentration dieser Elemente hängt vom Produktstrom ab. Beispielsweise sind das, beim Einsatz von Stäuben aus der Methylchlorsilansynthese, hauptsächlich Kupfer, Eisen und Sauerstoffverbindungen. Silicium-Eisen-Legierungen mit einem Eisengehalt von über 5 Gew.% werden üblicherweise als Ferrosilicium bezeichnet.

Wenn Siliciummetall (a) als Reaktionspartner eingesetzt wird, sind vorzugsweise mindestens 80 Gew.-% der erhaltenen Silane der allgemeinen Formel 1 Trichlorsilan und Tetrachlorsilan.

Die als Einsatzstoff eingesetzten Di- und Oligosilane (b) können durchaus feststoffhaltig sein und weitere Di- und Oligosiloxane und Carbosilane enthalten.

## Patentansprüche

1. Verfahren zur Herstellung von Silanen der allgemeinen Formel 1
RₐSiH_{b}Cl_{4-a-b} (1),
wobei
**R** Methyl oder Ethyl,
**a** die Werte 0, 1, 2 oder 3 und
**b** die Werte 0 oder 1 bedeuten,
aus Chlorwasserstoffgas und Reaktionspartnern, die ausgewählt werden aus
Siliciummetall und
Di- und Oligosilanen, deren Reste ausgewählt werden aus H, **R** und Cl,
bei dem die Herstellung des Chlorwasserstoffgases aus H₂ und Cl₂ im gleichen Verfahrensschritt erfolgt.

2. Verfahren nach Anspruch 1, bei dem die Herstellung des Chlorwasserstoffgases aus H₂ und Cl₂ in einem Verbrennungsrohr erfolgt.

3. Verfahren nach Anspruch 1 oder 2, bei dem zusätzlich zu dem aus H₂ und Cl₂ im gleichen Verfahrensschritt hergestellten Chlorwasserstoffgas auch Chlorwasserstoffgas als Reaktionspartner (c) eingespeist wird.

4. Verfahren nach Anspruch 1 bis 3, bei dem die maximale Menge an zudosierter HCl so gewählt wird, dass die Temperatur im Bereich der Reaktion von Chlorwasserstoffgas mit den Reaktionspartnern mindestens 400°C beträgt.
